# EUROPEAN PATENT SPECIFICATION

(11) **EP 1 892 436 B1**
(45) Date of publication and mention of the grant of the patent: **09.06.2010**
(21) Application number: 07016592.3
(22) Date of filing: 23.08.2007
(51) Int. Cl.: F16F 9/348

(54) **Valve structure for damper**
Ventilanordnung für einen Dämpfer
Structure de soupape pour amortisseur

(30) Priority: 25.08.2006 JP 2006229364
(43) Date of publication of application: 27.02.2008
(73) Proprietor: KAYABA INDUSTRY CO., LTD., Minato-ku, Tokyo 105-6190 (JP)
(72) Inventor: Chikamatsu, Satoshi, Tokyo 105-6190 (JP); Watanabe, Kouichi, Tokyo 105-6190 (JP)
(74) Representative: Grünecker, Kinkeldey, Stockmair & Schwanhäusser Anwaltssozietät

(56) References cited:
- EP-A- 1 566 562
- EP-A2- 0 228 033
- DE-A1- 10 312 225
- DE-A1- 10 347 204

## Description

### TECHNICAL FIELD OF THE INVENTION

This invention relates to a valve structure for a damper.

A valve structure according to the preamble of claim 1 is known from document EP 0 228 033 A.

### BACKGROUND OF THE INVENTION

A known, conventional valve structure for a damper is realized on a piston portion or the like of a damper for a vehicle, for example. In this valve structure for a damper, a ring-shaped leaf valve is laminated onto an outlet end of a port provided in the piston portion, and the port is opened and closed by the leaf valve.

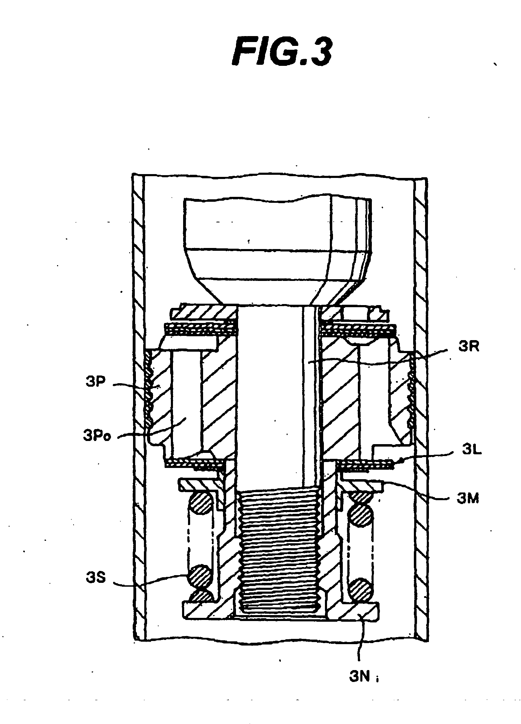

FIG. 3 is a longitudinal sectional view of a piston portion of a damper formed with a conventional valve structure of a damper (see Japanese Laid-open Patent Publication No. 9-291961). In this valve structure of a damper, an inner peripheral side of a leaf valve 3L is not supported fixedly. More specifically, the inner periphery of the leaf valve 3L slidingly contacts a piston rod 3R or an outer periphery of a tubular piston nut 3N that fixes a piston 3P to the piston rod 3R. A lower surface of the leaf valve 3L is biased by a spring 3S via a main valve 3M. As shown in FIG. 3, the valve described above is realized as an expansion side damping valve of a damper.

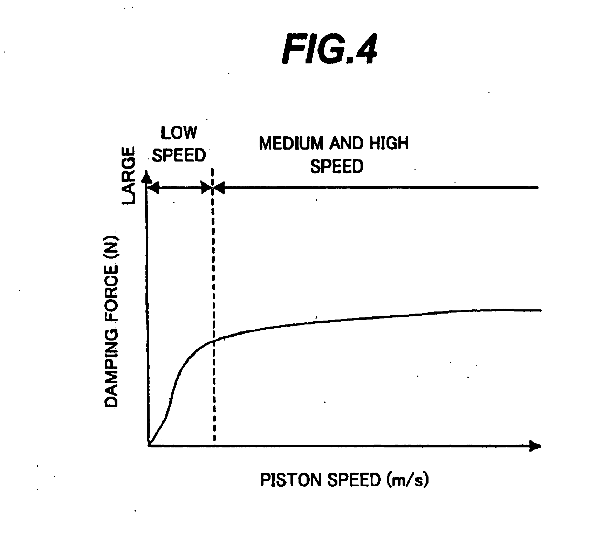

In a damper to which this valve structure is applied, when the piston speed during upward movement of the piston 3P is in a low speed region, the outer peripheral side of the leaf valve 3L bends using a site that contacts the main valve 3M laminated onto the leaf valve 3L as a fulcrum. Thus, as shown in FIG. 4, this damper exhibits a substantially identical damping characteristic to the damper in which the inner periphery of the leaf valve 3L is supported fixedly.

When the piston speed reaches medium and high speed regions, the pressure of working fluid passing through a port 3Po increases such that the leaf valve 3L is pushed down together with the main valve 3M in an axial direction relative to the piston 3P against the biasing force of the spring 3S, As a result, the flow passage area becomes larger than that of a damper valve in which the inner periphery of the leaf valve 3L is supported fixedly, thereby suppressing excessive damping force and enabling an improvement in the comfort of the vehicle.

### SUMMARY OF THE INVENTION

However, although the conventional valve structure described above is useful in terms of improving the comfort of the vehicle, problems such as the following may arise. For example, when the piston speed reaches the high speed region during upward movement of the piston 3P, the leaf valve 3L is simply pushed downward from the piston 3P in the axial direction in accordance with the piston speed, and the damping coefficient does not increase. Accordingly, the damping force tends to be insufficient when the piston speed reaches the high speed region, and as a result vibration cannot be suppressed sufficiently, leading to deterioration of the vehicle comfort.

This invention has been designed to solve this problem, and an object thereof is to provide a valve for a damper with which sufficient damping force can be obtained even when the piston speed reaches a high speed region.

A valve structure for a damper according to the present invention comprises the features of claim 1.

The details as well as other features and advantages of this invention are set forth in the remainder of the specification and are shown in the accompanying drawings.

### BRIEF DESCRIPTION OF THE DRAWINGS

FIG. 1 is a longitudinal sectional view of a piston portion for a damper on which a valve structure for a damper according to an embodiment is realized.

FIG. 2 is a view showing a damping characteristic of the damper on which the valve structure for a damper according to this embodiment is realized.

FIG. 3 is a longitudinal sectional view of a piston portion of a damper on which a conventional valve structure for a damper is realized.

FIG. 4 is a view showing a damping characteristic of the damper on which the conventional valve structure for a damper is realized.

### DESCRIPTION OF THE PREFERRED EMBODIMENT

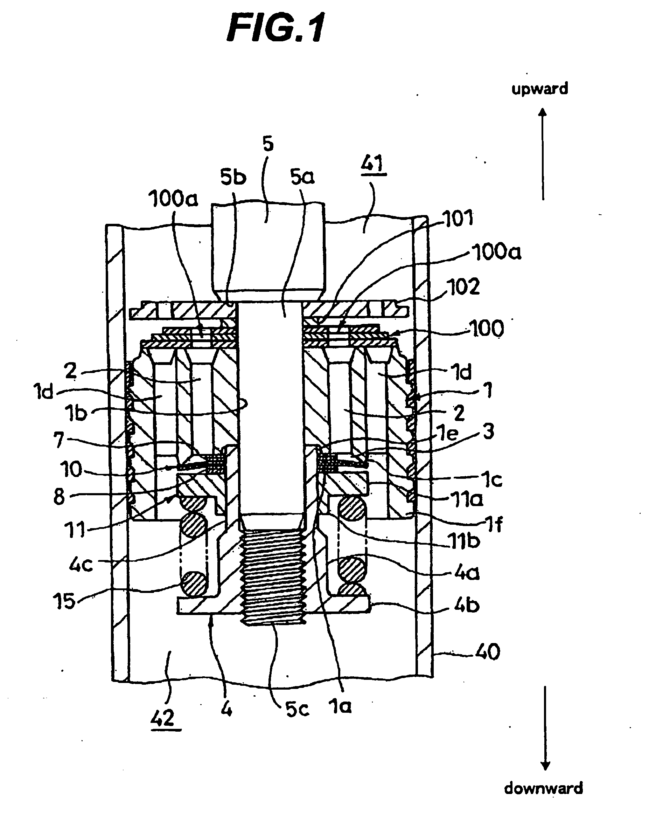

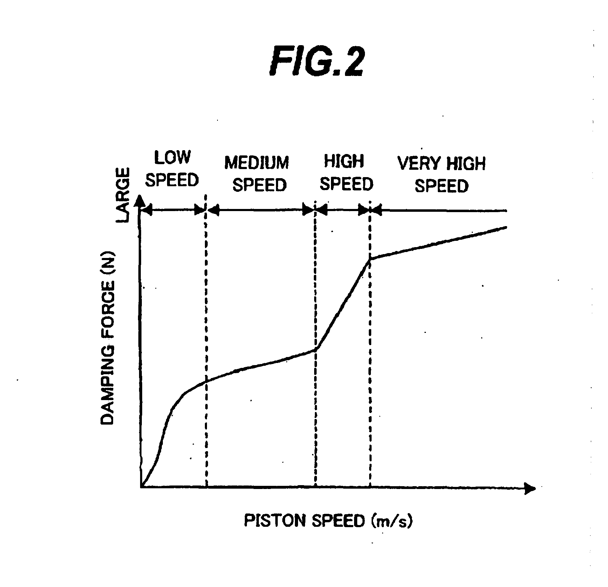

A valve structure for a damper according to this invention will be described below with reference to the drawings. FIG. 1 is a longitudinal sectional view of a piston portion for a damper on which a valve structure for a damper according to an embodiment is realized. FIG. 2 is a view showing a damping characteristic of the damper on which the valve structure for a damper according to this embodiment is realized.

As shown in FIG. 1, a valve structure for a damper according to this embodiment is realized as an expansion side damping valve for a piston portion of a damper. The damper is used in a vehicle, for example. The valve structure comprises a piston 1, a piston nut 4, a leaf valve 10, a valve restraining member 11, and a coil spring 15.

The piston 1 is a partition member formed with a port 2 through which an upper chamber 41 and a lower chamber 42 are connected. The piston nut 4 is an upright member that stands upright from an axial center portion of the piston 1. The piston nut 4 is inserted into the inner peripheral side of the ring-shaped leaf valve 10, and the leaf valve 10 is laminated onto the piston 1 so as to close the port 2. The ring-shaped valve restraining member 11 is laminated onto the leaf valve 10 to restrict the bending amount of the leaf valve 10. The coil spring 15 is an elastic body that biases the leaf valve 10 in a direction for closing the port 2 via the valve restraining member 11.

The damper on which the valve structure is realized is well known, and hence detailed description thereof has been omitted. For example, the damper comprises a cylinder 40, a head member (not shown) that seals an upper end of the cylinder 40, a piston rod 5 that penetrates the head member (not shown) so as to slide freely therein, the piston 1 which is provided on the end portion of the piston rod 5, a sealing member (not shown) that seals a lower end of the cylinder 40, and a reservoir or air chamber, not shown in the figure. The reservoir or air chamber not shown in the figure compensates for variation in the internal volume of the cylinder corresponding to the volume of the piston rod 5 that retreats from and penetrates the cylinder 40.

The interior of the cylinder 40 is divided into two pressure chambers, namely an upper chamber 41 and a lower chamber 42, by the piston 1. The interior of the cylinder 40 is filled with a liquid, specifically working fluid.

When the piston 1 moves in the upward direction of FIG. 1 relative to the cylinder 40, the internal pressure of the upper chamber 41. rises, whereby the working fluid moves from the upper chamber 41 to the lower chamber 42 through the port 2. At this time, resistance is applied to the moving working fluid by the leaf valve 10, thereby generating a predetermined pressure loss such that a predetermined damping force is generated in the damper.

The valve structure will be described in detail below. The piston 1, which serves as a partition member, is formed in a tubular shape having a bottom, and comprises an insertion hole 1b, the port 2, a window 3 communicating with the port 2, a ring-shaped valve seat 1c, a port 1d. and a tubular portion 1f.

The insertion hole 1 b is provided in an axial center portion of a bottom portion 1a, and the piston rod 5 of the damper is inserted therein. The valve seat 1c is formed on an outer peripheral side of the window 3, which serves as an outlet end of the port 2, and projects onto the leaf valve 10 side relative to the bottom portion 1a of the piston 1. The tubular portion 1f extends to the outer peripheral side of the piston 1.

The working fluid that moves from the lower chamber 42 to the upper chamber 41 when the damper contracts flows into the pressure side port 1d. The pressure side port 1d is provided on an outer peripheral side of the expansion side port 2.

As described above, the piston rod 5 is inserted into the insertion hole 1b of the piston 1. A tip end portion of the piston rod 5 projects onto a lower side of the piston 1 (the downward side in FIG. 1).

An outer diameter of a tip end 5a of the piston rod 5 is set to be smaller than an outer diameter of a part thereof on the upper side of the tip end 5a, and a step portion 5b is formed in the part where the outer diameter of the upper side part and the outer diameter of the tip end portion differ.

The piston nut 4 is screwed onto the tip end 5a of the piston rod 5. The piston nut 4 is constituted by a tubular portion 4a and a collar 4b provided at the lower end of FIG. 1. A small diameter portion 4c having a small diameter is formed on an upper end outer periphery of the tubular portion 4a.

The tip end 5a of the piston rod 5 is inserted into the inner periphery of a valve stopper 102, a spacer 101, a pressure side leaf valve 100, and the piston 1 in that order, and the piston nut 4 is screwed to a screw portion 5c provided on the tip end of the piston rod 5 from the bottom of the piston 1. Thus, each of the members described above is sandwiched between the step portion 5b of the piston rod 5 and the upper end of the piston nut 4 so as to be fixed to the piston rod 5.

It is to be noted that a lower end opening portion of the insertion hole 1b provided in the bottom portion 1a of the piston 1 is enlarged in diameter to provide an enlarged diameter portion 1e. An upper end of the small diameter portion 4c of the tubular portion 4a can be inserted into a step portion formed by the enlarged diameter portion le.

A plurality of ring-shaped spacers 7 that have a smaller diameter than the leaf valve 10 and contact the outer periphery of the small diameter portion 4c of the piston nut 4 slidingly are laminated onto the bottom portion 1a of the piston 1. The leaf valve 10 is laminated onto the bottom of the spacers 7. Further, a plurality of ring-shaped spacers 8 that have a smaller diameter than the leaf valve 10 and contact the outer periphery of the small diameter portion 4c slidingly are laminated onto the bottom of the leaf valve 10. The valve restraining member 11, which contacts the outer periphery of the small diameter portion 4c slidingly, is laminated onto the bottom of the spacers 8.

The leaf valve 10 is structured as a laminated leaf valve in which a plurality of ring-shaped leaves are laminated. By bringing an upper surface of the leaf valve 10 into contact with the valve seat 1c, the port 2 of the piston 1 can be closed. It is to be noted that, although not shown in the figure, either a notch is provided in the outer periphery of the leaf that sits on the valve seat 1c or a well-known fixed orifice is formed by punching the valve seat 1c.

In this embodiment, the leaf valve 10 is constituted as a laminated leaf valve. The number of leaves may be set arbitrarily according to the damping characteristic (the relationship between piston speed and damping force) to be realized with the valve structure. In other words, depending on the damping characteristic to be generated in the damper, a plurality of leaves or only one leaf may be provided. Furthermore, the outer diameter of each leaf may be set differently according to the damping characteristic to be generated in the damper.

It is to be noted that, by providing the enlarged diameter portion 1e, the position of the piston nut 4 can be set in a radial direction relative to the piston 1. After assembling the leaf valve 10, spacers 7, 8, and valve restraining member 11 on the piston nut 4, these members can be attached to the tip end 5a of the piston rod 5 at one time together with the piston 1, which is convenient in terms of manufacture. However, the enlarged diameter portion le may be omitted.

As described above, by forming the piston 1 in a tubular shape having a bottom, the members constituting the valve, such as the leaf valve, can be housed inside the piston 1. As a result, the length from the upper end of the piston 1 in FIG. 1 to the lower end of the piston nut 4 can be shortened, enabling a reduction in the size of the piston portion.

Further, the valve restraining member 11, which is laminated onto the bottommost side, is constituted by a ring-shaped main body 11a and a tubular portion 11 b. An inner periphery of the ring-shaped main body 11 a slidingly contacts the outer periphery of the small diameter portion 4c of the piston nut 4, and an outer diameter of the ring-shaped main body 11a is set to be substantially identical to the outer diameter of the leaf valve 10. The tubular portion 11b is suspended downward from the lower end of the ring-shaped main body 11a in FIG. 1, and an inner periphery thereof contacts the outer periphery of the small diameter portion 4c slidingly.

The coil spring 15 serving as an elastic body is interposed between the ring-shaped main body 11a of the valve restraining member 11 and the collar 4b of the piston nut 4. The leaf valve 10 is pushed toward the valve seat 1c of the piston 1 via the valve restraining member 11 by the elastic force of the coil spring 15.

The coil spring 15 is compressed in advance and interposed between the valve restraining member 11 and the collar 4b of the piston nut 4 such that a predetermined initial load is applied thereto.

It is to be noted that the tubular portion 11b of the valve restraining member 11 may be omitted. However, the tubular portion 11b functions to center the coil spring 15, and by means of this centering function, the elastic force of the coil spring 15 can be caused to act on the valve restraining member 11 in a non-deviating fashion. Hence, the tubular portion 11 b is preferably provided.

With the structure described above, the elastic force of the coil spring 15 is caused to act on the inner peripheral side of the leaf valve 10 via the valve restraining member 11, whereby the leaf valve 10 is biased in a direction for closing the port 2 by the coil spring 15.

Hence, when the piston 1 moves in the upward direction of FIG. 1, causing an increase in the difference between the internal pressure of the upper chamber 41 and the internal pressure of the lower chamber 42, the leaf valve 10 and valve restraining member 11 compress the coil spring 15 against the elastic force thereof, whereby the entire leaf valve 10 retreats from the piston 1 in an axial direction, or in other words is lifted in the downward direction of FIG. 1.

The overall axial direction thickness of the spacers 7 is set to be shorter than the axial direction length from the bottom portion 1 a to the tip end of the valve seat 1c of the piston 1, and therefore initial bending is applied to the leaf valve 10, the inner peripheral side of which receives the biasing force. A valve opening pressure generated when the leaf valve 10 moves away from the valve seat 1c to open the port 2 can be adjusted by setting the bending amount of the initial bending. The bending amount of the initial bending can be modified in accordance with the overall thickness of the spacers 7, and is set at an optimum value for the vehicle to which the damper is applied. It is to be noted that, depending on the axial direction length from the bottom portion 1a to the lower end of the valve seat 1c of the piston 1, the spacers 7 may be omitted.

When the piston 1 moves upward, the outer periphery of the leaf valve 10 bends under the pressure of the working fluid passing through the port 2. The bending amount of the outer periphery of the leaf valve 10 increases as the piston speed rises. When the bending amount of the leaf valve 10 becomes large, the outer peripheral side of the leaf valve 10 contacts the ring-shaped main body 11a of the valve restraining member 11, whereby further bending of the leaf valve 10 is restricted. The bending amount of the leaf valve 10 may be adjusted by setting the overall axial direction thickness of the spacers 8 interposed between the leaf valve 10 and the valve restraining member 11. It is to be noted that by providing a projecting portion exhibiting a similar function to the spacers 8 on the inner peripheral upper portion of the valve restraining member 11, the spacers 8 may be omitted.

In the above description, the coil spring 15 is used as an elastic body. However, a plate spring, a leaf spring, or rubber, for example, may be used as the elastic body as long as a predetermined biasing force acts on the leaf valve 10.

Next, the actions of the valve structure of the damper according to this embodiment will be described. As described above, when the piston 1 moves to the upper side of FIG. 1 relative to the cylinder 40, the internal pressure of the upper chamber 41 increases, and as a result, the working fluid in the upper chamber 41 moves into the lower chamber 42 through a hole 100a provided in the pressure side leaf valve 100 and the port 2.

In a low piston speed region, the leaf valve 10 is biased by the coil spring 15 and pushed so as to close the port 2. Accordingly, the bending amount of the leaf valve 10, which bends using the outer peripheral edge of the spacers 8 as a fulcrum, is small. In this case, the working fluid mainly passes through the aforementioned notch provided in the outer periphery of the leaf that sits on the valve seat 1c of the leaf valve 10 or the aforementioned fixed orifice formed by punching the valve seat 1c.

The differential pressure between the internal pressure of the upper chamber 41 and the internal pressure of the lower chamber 42 acts to cause the leaf valve 10 and the valve restraining member 11 to retreat from the piston 1, and thereby applies thrust to cause the valve restraining member 11 to retreat. When the piston speed is in the low speed region, the differential pressure is small, and therefore the thrust does not exceed the predetermined initial load applied to the coil spring 15. Hence, the coil spring 15 is not compressed, the valve restraining member 11 maintains its current position, and only the leaf valve 10 bends slightly.

At this time, a ring-shaped gap formed between the leaf valve 10 and the valve seat 1c is extremely small, and therefore the working fluid passes through the fixed orifice. Hence, as shown in FIG. 2, when the piston speed is in the low speed region, an incline of variation in the damping force relative to variation in the piston speed is large, and sufficient damping force is generated.

When the speed of the piston 1 reaches a medium speed region, the difference between the internal pressure of the upper chamber 41 and the internal pressure of the lower chamber 42 increases, leading to an increase in the force by which the working fluid pushes the leaf valve 10 in the downward direction of FIG. 1. As a result, the outer peripheral edge of the leaf valve 10 bends using the outer peripheral edge of the spacers 8 as a fulcrum, whereby the gap that is formed when the leaf valve 10 moves away from the valve seat 1c increases beyond that of the low piston speed region.

The bending amount of the leaf valve 10 increases as the piston speed rises. When the piston speed is in the medium speed region, the leaf valve 10 bends until the outer peripheral edge thereof eventually comes into contact with the upper end of the valve restraining member 11 in FIG. 1.

As described above, the differential pressure between the internal pressure of the upper chamber 41 and the internal pressure of the lower chamber 42 acts to cause the leaf valve 10 and the valve restraining member 11 to retreat from the piston 1, and thereby applies thrust to cause the valve restraining member 11 to retreat. When the piston speed is in the medium speed region, the predetermined initial load applied to the coil spring 15 is still larger than the thrust, and therefore the coil spring 15 is not compressed. Hence, the valve restraining member 11 maintains its current position, and only the leaf valve 10 bends.

The ring-shaped gap formed between the leaf valve 10 and the valve seat 1c increases in proportion to the piston speed. When the piston speed is in the medium speed region, the leaf valve 10 is set to bend until it contacts the valve restraining member 11. Hence, in the damping characteristic indicating the relationship between the piston speed and the damping force, the incline of variation in the damping force relative to variation in the piston speed is smaller in the medium piston speed region than in the low piston speed region, as shown in FIG. 2. Thus, the damping force can be prevented from becoming excessive in the medium piston speed region.

When the speed of the piston 1 reaches a high speed region, the difference between the internal pressure of the upper chamber 41 and the internal pressure of the lower chamber 42 increases further, leading to an increase in the force by which the working fluid pushes the leaf valve 10 in the downward direction of FIG. 1. When the piston speed shifts from the medium speed region to the high speed region, the leaf valve 10 bends until it contacts the upper end of the valve restraining member 11 and is held in this state of contact.

As described above, the differential pressure between the internal pressure of the upper chamber 41 and the internal pressure of the lower chamber 42 acts to cause the leaf valve 10 and the valve restraining member 11 to retreat from the piston 1, and thereby applies thrust to cause the valve restraining member 11 to retreat. The predetermined initial load applied to the coil spring 15 is set to be larger than the thrust acting on the valve restraining member 11 when the speed of the piston 1 is in the high speed region. Hence, the valve restraining member 11 maintains its position, and the leaf valve 10 is maintained in a state of contact with the upper end of the valve restraining member 11.

When the piston speed is in the high speed region, the ring-shaped gap formed between the leaf valve 10 and the valve seat 1c does not vary, even if the piston speed increases. Hence, in the damping characteristic indicating the relationship between the piston speed and the damping force, the damping force incline when the piston speed is in the high speed region is greater than the damping force incline when the piston speed is in the medium speed region, as shown in FIG. 2. As a result, the damping coefficient in the high piston speed region increases.

When the speed of the piston 1 reaches a very high speed region beyond the high speed region, the difference between the internal pressure of the upper chamber 41 and the internal pressure of the lower chamber 42 increases further. As a result, the force by which the working fluid pushes the leaf valve 10 in the downward direction of FIG. 1 increases further.

As described above, the differential pressure between the internal pressure of the upper chamber 41 and the internal pressure of the lower chamber 42 acts to cause the leaf valve 10 and the valve restraining member 11 to retreat from the piston 1, and thereby applies thrust to cause the valve restraining member 11 to retreat. When the speed of the piston 1 is in the very high speed region, the thrust exceeds the predetermined initial load applied to the coil spring 15, thereby becoming greater than the biasing force of the coil spring 15. As a result, the leaf valve 10 and the valve restraining member 11 retreat from the piston 1 in the axial direction, or in other words move in the downward direction of FIG. 1.

The ring-shaped gap formed between the leaf valve 10 and the valve seat 1c increases in proportion to the piston speed as the leaf valve 10 and valve restraining member 11 are lifted. Hence, in the damping characteristic indicating the relationship between the piston speed and the damping force, the damping force incline when the piston speed is in the very high speed region is smaller than the damping force incline when the piston speed is in the high speed region, as shown in FIG. 2. Thus, the damping force is prevented from becoming excessive in the very high piston speed region.

As described above, in the damper valve structure of this embodiment, the coil spring 15 serving as an elastic body does not begin compression until at least the outer periphery of the leaf valve 10 bends into contact with the valve restraining member 11. Hence, as shown in FIG. 2, the damping force incline can be made large in the low piston speed region, small in the medium piston speed region, large in the high piston speed region, and then small again in the very high piston speed region.

Setting to ensure that the coil spring 15 serving as an elastic body does not begin compression until the outer periphery of the leaf valve 10 bends into contact with the valve restraining member 11 may be performed as follows. The predetermined initial load on the coil spring 15 serving as an elastic body should be set to be greater than the thrust that acts such that the valve restraining member 11 is caused to retreat from the piston 1 by a minimum pressure for causing the outer periphery of the leaf valve 10 to bend into contact with the valve restraining member 11, or in other words the pressure generated on the boundary between the medium piston speed region and the high piston speed region.

As described above, in the damper valve structure of this embodiment, the damping force can be kept low when the piston speed is in the medium speed region and increased beyond that of the medium piston speed region when the piston speed reaches the high speed region. Furthermore, vibration suppression is performed sufficiently with no damping force deficiency even when the piston speed reaches the high speed region, and therefore the comfort of the vehicle can be improved.

When the piston speed shifts from the medium speed region to the high speed region, the damping force increases in proportion to the piston speed, and therefore sudden variation in the damping force does not occur. Hence, vehicle passengers do not feel any sense of discomfort or shock due to sudden variation in the damping force.

Further, in the very high piston speed region, the damping force incline can be reduced again, and therefore excessive damping force in the very high piston speed region exceeding the high piston speed region can be prevented. Thus, deterioration of the vehicle comfort and abnormally high pressure in the damper can be prevented.

Furthermore, when the damper expands to its maximum such that the amplitude is large and when the piston speed reaches the high speed region, the damping force generated in the damper can be increased by increasing the damping coefficient. As a result, the piston speed can be reduced quickly, thereby alleviating shock during maximum expansion.

This invention is not limited to the embodiment described above. For example, the leaf valve 10 and valve restraining member 11 contact the tubular portion 4a of the piston nut 4 slidingly, but the tubular portion 4a may be provided as an independent member different from the piston nut 4.

If the piston 1 can be fixed to the piston rod 5 using other means, the leaf valve 10 and valve restraining member 11 may be provided in direct sliding contact with the outer periphery of the piston rod 5 by providing a member for supporting the lower end of the coil spring 15 in FIG. 1 and using the piston rod 5 as an upright member. Further, the piston rod 5 is caused to project by providing the insertion hole 1a in the piston 1 and inserting the tip end portion of the piston 5 therein, but an upright member that is integral or separate to the piston 1 serving as a partition member may be provided in the axial center portion of the piston 1.

In the above description, the valve structure is realized as an expansion side damping valve on a piston portion of a damper, but may be realized as a pressure side damping valve or on a base valve portion. The valve structure may also be applied to a valve for a damper that functions as a damping force generating element for generating damping force.

## Claims

1. A valve structure for a damper, comprising:
a partition member (1) formed with a port through which a first chamber and a second chamber are connected;
an upright member (4) that stands upright from an axial center portion of the partition member (1);
a ring-shaped leaf valve (10), an inner peripheral side of which is penetrated by the upright member (4), and which is laminated onto the partition member (1) so as to close the port;
a ring-shaped valve restraining member (11) which is laminated onto the leaf valve (10) to restrict a bending amount of the leaf valve (10); and
an elastic body (15) which biases the leaf valve (10) in a direction for closing the port via the valve restraining member (11),
wherein the elastic body (15) biases the leaf valve (10) in such a manner that compression of the elastic body (15) does not begin until at least an outer periphery of the leaf valve (10) bends into contact with the valve restraining member (11),
**characterized in that**
the elastic body (15) is compressed in advance and interposed between the valve restraining member (11) and the upright member (4) such that an-initial load is applied thereto, and the initial load is set to be larger than a thrust which acts such that the valve restraining member (11) is caused to retreat from the partition member (1)by a minimum pressure at which the outer periphery of the leaf valve (10) bends into contact with the valve restraining member (11), and
there are at least three stages including a stage where the leaf valve (10) bends until it contacts the valve restraining member (11), a stage where the leaf valve (10) is maintained in a state of contact with the valve restraining member (11) and a stage where the leaf valve (10) and the valve restraining member (11) retreat from the partition member (1), depending on a partition member (1) speed.

2. The valve structure for a damper according to claim 1, wherein the partition member (1) is a piston, an axial center portion of which is penetrated by a piston rod, and the upright member (4) is a piston nut which is formed in a tubular shape and screwed to a tip end of the piston rod such that the piston is fixed to the piston rod.

## Patentansprüche

1. Ventilstruktur für einen Dämpfer, die umfasst:
ein Trennelement (1), das mit einer Öffnung versehen ist, über die eine erste Kammer und eine zweite Kammer verbunden sind;
ein Stützenelement (4), das aufrecht auf einem axialen Mittelabschnitt des Trennelementes (1) steht;
ein ringförmiges Membranventil (10), dessen Innenumfangsseite von dem Stützenelement (4) durchdrungen wird, und das so auf das Trennelement (1) geschichtet ist, dass es die Öffnung verschließt;
ein ringförmiges Ventil-Rückhalteelement (11), das auf das Membranventil (10) geschichtet ist, um ein Maß der Biegung des Membranventils (10) einzuschränken; und
einen elastischen Körper (15), der das Membranventil (10) über das Ventil-Rückhalteelement (11) in einer Richtung zum Verschließen der Öffnung spannt,
wobei der elastische Körper (15) das Membranventil (10) so spannt, dass Zusammendrücken des elastischen Körpers (15) erst dann beginnt, wenn ein Außenumfang des Membranventils (10) in Kontakt mit dem Ventil-Rückhalteelement (11) gebogen wird,
**dadurch gekennzeichnet, dass**
der elastische Körper (15) im Voraus zusammengedrückt und zwischen dem Ventil-Rückhalteelement (11) und dem Stützenelement (4) angeordnet wird, so dass eine Anfangslast darauf ausgeübt wird,
und die Anfangslast um einen minimalen Druck, bei dem sich der Außenumfang des Membranventils (10) im Kontakt mit dem Ventil-Rückhalteelement (11) biegt, stärker eingestellt wird als ein Schub, der so wirkt, dass das Ventil-Rückhalteelement (11) veranlasst wird, sich aus dem Trennelement (1) zurückzuziehen, und
wenigstens drei Phasen vorhanden sind, die eine Phase, in der sich das Membranventil (10) biegt, bis es mit dem Ventil-Rückhalteelement (11) in Kontakt kommt, eine Phase, in der das Membranventil (10) in einem Zustand von Kontakt mit dem Ventil-Rückhalteelement (11) gehalten wird, und eine Phase einschließen, in der sich das Membranventil (10) und das Ventil-Rückhalteelement (11) in Abhängigkeit von einer Trennelementgeschwindigkeit aus dem Trennelement (1) zurückziehen.

2. Ventilstruktur für einen Dämpfer nach Anspruch 1, wobei das Trennelement (1) ein Kolben ist und ein axialer Mittelabschnitt desselben von einer Kolbenstange durchdrungen wird und das Stützenelement (4) eine Kolbenmutter ist, die in Röhrenform ausgebildet und so auf ein vorderes Ende der Kolbenstange aufgeschraubt ist, dass der Kolben an der Kolbenstange befestigt ist.

## Revendications

1. Structure de soupape pour un amortisseur, comprenant :
un élément de séparation (1) formé avec un orifice à travers lequel une première chambre et une seconde chambre sont raccordées ;
un élément droit (4) qui est droit à partir d'une partie centrale axiale de l'élément de séparation (1) ;
une soupape à lamelle (10) en forme d'anneau, dont un côté périphérique interne est pénétré par l'élément droit (4), et qui est stratifiée sur l'élément de séparation (1) afin de fermer l'orifice ;
un élément de retenue de soupape (11) en forme d'anneau qui est stratifié sur la soupape à lamelle (10) pour limiter une quantité de flexion de la soupape à lamelle (10) ; et
un corps élastique (15) qui sollicite la soupape à lamelle (10) dans une direction pour fermer l'orifice via l'élément de retenue de soupape (11),
dans lequel le corps élastique (15) sollicite la soupape à lamelle (10) de sorte que la compression du corps élastique (15) ne commence pas avant qu'au moins une périphérie externe de la soupape à lamelle (10) se courbe en contact avec l'élément de retenue de soupape (11),
**caractérisée en ce que :**
le corps élastique (15) est comprimé à l'avance et intercalé entre l'élément de retenue de soupape (11) et l'élément droit (4) de sorte qu'une charge initiale est appliquée sur celui-ci,
et la charge initiale est déterminée pour être supérieure à une poussée qui agit de sorte que l'élément de retenue de soupape (11) est amené à se retirer de l'élément de séparation (1) par une pression minimum à laquelle la périphérie externe de la soupape à lamelle (10) se courbe en contact avec l'élément de retenue de soupape (11), et
il existe au moins trois étapes comprenant une étape dans laquelle la soupape à lamelle (10) se courbe jusqu'à ce qu'elle entre en contact avec l'élément de retenue de soupape (11), une étape dans laquelle la soupape à lamelle (10) est maintenue dans un état de contact avec l'élément de retenue de soupape (11) et une étape dans laquelle la soupape à lamelle (10) et l'élément de retenue de soupape (11) se retirent de l'élément de séparation (1), en fonction d'une vitesse de l'élément de séparation (1).

2. Structure de soupape pour un amortisseur selon la revendication 1, dans laquelle l'élément de séparation (1) est un piston, dont une partie centrale axiale est pénétrée par une tige de piston et l'élément droit (4) est un écrou de piston qui est formé selon une forme tubulaire et vissé sur une extrémité de pointe de la tige de piston de sorte que le piston est fixé à la tige de piston.
